(19) **Europäisches Patentamt**

**European Patent Office**

**Office européen des brevets**

(11) Veröffentlichungsnummer: **0 258 529 B1**

(12) # EUROPÄISCHE PATENTSCHRIFT

(45) Veröffentlichungstag der Patentschrift:
28.08.91 Patentblatt 91/35

(51) Int. Cl.⁵: **F02M 31/16**

(21) Anmeldenummer: **87105522.4**

(22) Anmeldetag: **14.04.87**

(54) **Kraftstoff-Vorwärmer.**

(30) Priorität: **04.09.86 DE 3630084**

(43) Veröffentlichungstag der Anmeldung:
**09.03.88 Patentblatt 88/10**

(45) Bekanntmachung des Hinweises auf die
Patenterteilung:
**28.08.91 Patentblatt 91/35**

(84) Benannte Vertragsstaaten:
**AT BE CH DE ES FR GB GR IT LI NL SE**

(56) Entgegenhaltungen:
**EP-A- 0 094 885**
**EP-A- 0 120 733**
**EP-A- 0 197 169**
**DE-B- 1 111 221**
**US-A- 1 891 434**
**US-A- 4 286 564**

(73) Patentinhaber: **Ing. Walter Hengst GmbH &
Co. KG**
**Nienkamp 75**
**W-4400 Münster (DE)**

(72) Erfinder: **Baumann, Dieter Dipl.Ing.**
**Ueberwasserstrasse 10**
**W-4402 Greven-Gimbte (DE)**

(74) Vertreter: **Schulze Horn, Stefan, Dipl.-Ing.
M.Sc.**
**Goldstrasse 36**
**W-4400 Münster (DE)**

EP 0 258 529 B1

## Beschreibung

Die Erfindung betrifft einen Wärmetauscher der im Oberbegriff des Patentanspruches 1 genannten Art.

Aus der US-A-1891434 ist ein Wärmetauscher der genannten Art bekannt, welcher generell für den Wärmeaustausch zwischen zwei fluiden Medien geeignet ist, aber bevorzugt für eine Erwärmung von Öl durch Heißdampf vorgesehen ist. Als nachteilig wird bei diesem Wärmetauscher angesehen, daß die Verteiler- und Sammelkanäle in besonders hierfür ausgestalteten Deckeln angeordnet sind. Dies bedeutet, daß der Wärmetauscher wenigstens drei kompliziert ausgebildete Teile aufweist, deren Herstellung relativ aufwendig ist. Außerdem sind hier alle Kanäle mit glatten Wänden ausgeführt, wodurch sich nachteilig eine weitgehend laminare Strömung der Medien in den Kanälen einstellt, was einen niedrigen Wirkungsgrad zur Folge hat.

Aus der EP-A-0 094 885 ist ein wassergekühlter Verbrennungsmotor bekannt, der mit einem Kraftstoff-Vorwärmer ausgestattet ist. Der Kraftstoff-Vorwärmer besitzt hier ebenfalls einen Mittelteil mit Kanälen und einseitig einen Deckel, während er mit seiner anderen Seite unmittelbar an den Motorblock angeflanscht ist. Bei diesem Vorwärmer strömt der Kraftstoff durch einen einzelnen, durchgehenden, schlangenlinienförmigen Kanal an der einen, von dem Deckel abgedeckten Seite des Mittelteils, während die andere, dem Motorblock zugewandte Seite des Mittelteils mehrere voneinander getrennte Rillen oder nutartige Vertiefungen aufweist, die gegenüber dem Kraftstoffkanal versetzt angeordnet sind und die entlang ihrer einen, offenen Längsseite alle in eine gemeinsame Wasserkammer münden, die von Kühlwasser aus dem Motorblock durchströmt ist. Dabei ist der Wandungszug des Mittelteils des Vorwärmers in dessen Längsrichtung, d.h. im Längsschnitt gesehen, mäandrierend ausgeführt. Nachteilig ist bei diesem Vorwärmer, daß das Kühlwasser in der Wasserkammer quer zu den Rillen fließt und damit zu einem wesentlichen Teil einfach über die Rillen hinwegströmt, statt diese zu durchströmen. Der größte Teil des Wassers in den Rillen steht deshalb still und trägt nicht zu einem Wärmeaustausch bei. Ein weiterer Nachteil ist, daß die beiden Medien in diesem Vorwärmer im Querstrom zueinander geführt werden, was einen relativ geringen Wärmeaustausch-Wirkungsgrad zur Folge hat. Schließlich ist noch anzuführen, daß die Wandungen des Kraftstoffkanals glattflächig ausgebildet sind, so daß es zur Ausbildung einer laminaren Strömung des Kraftstoffes kommt, die einem intensiven Wärmeaustausch abträglich ist. Dieser bekannte Vorwärmer erreicht damit bei einer vorgegebenen Baugröße nur einen begrenzten Wirkungsgrad.

Es stellt sich daher die Aufgabe, einen Wärmetauscher der im Oberbegriff des Patentanspruches 1 angegebenen Art zu schaffen, der kompakt, leicht und funktionssicher ist, der einen hohen Wirkungsgrad aufweist und der kostengünstig herstellbar und montierbar ist.

Die Lösung dieser Aufgabe gelingt erfindungsgemäß durch einen Wärmetauscher der genannten Art mit den kennzeichnenden Merkmalen des Patentanspruches 1.

Der neue Wärmetauscher bzw. Kraftstoffvorwärmer verbindet einen einfachen Aufbau mit einer geringen Baugröße und einem hohen Wirkungsgrad. Da alle für die Führung der beiden Medien erforderlichen Kanäle trotz des Vorhandenseins mehrerer parallel durchströmter Kanäle für jedes der beiden Medien innerhalb des Mittelteils angeordnet sind, können die beiden Deckel einfach als flache Platten ausgeführt sein, was eine problemlose und kostengünstige Herstellung und Montage sowie eine kompakte, glattflächige Bauform ergibt. Die Führung der beiden Medien im Gegenstrom auf mehreren parallelen Strömungswegen und die Verwirbelung der Medien durch die auf den Wandungen der Kanäle vorgesehenen Rippen sorgen für einen intensiven Wärmeaustausch und tragen so zu einem hohen Wirkungsgrad bei.

Eine ganz besonders Kompakte Form des Wärmetauschers wird dadurch erreicht, daß die Kanäle im Mittelteil U-förmig parallel zueinander verlaufend angeordnet sind und daß alle Kanäle im wesentlichen in einer gemeinsamen stirnseitigen Ebene enden. Alle erforderlichen Anschlüsse liegen so an einem Ende des Wärmetauschers und können von dort z.B. gemeinsam weitergeführt werden. Im Prinzip wird diese Ausführung des Wärmetauschers anschaulich gesagt durch ein "Aufeinander-zu-biegen" der Enden eines gestreckten Wärmetauschers mit gradlinigen Kanälen erhalten. Welche Ausführung des Wärmetauschers zum Einsatz kommt, liegt im Ermessen des Fachmannes und richtet sich nach den vorhandenen Gegebenheiten, wie z.B. der Einbausituation in einem Motorraum.

Besonders günstig in der Herstellung und im Wirkungsgrad wird der Wärmetauscher dadurch, daß zumindest der Mittelteil aus Aluminium oder einer Aluminium-Legierung besteht und im Druckgußverfahren hergestellt ist. Über den Mittelteil hinaus können natürlich auch die Deckel als Aluminium-Druckgußteile hergestellt sein. Das Druckgußverfahren liefert die Teile in jedem Fall sehr kostengünstig und erfordert nur noch wenige manuelle Arbeiten. Weiterhin besitzen aus Aluminium-Legierungen hergestellte Teile neben ihrer hohen Wärmeleitfähigkeit ein geringes Gewicht und sind korrosionsfest. Wegen der beschriebenen besonderen Ausgestaltung der Teile des Wärmetauschers, besonders des Mittelteils, ist die Herstellung im Druckgußverfahren problemlos möglich, da alle Teile leicht entformbar sind, wobei sogar lediglich zwei antiparallel zueinander verlaufende Entform-Richtungen bei dem Mittelteil erforderlich sind. Damit können die entsprechenden Gußfor-

2

men relativ einfach gehalten werden, was weiter zu einer kostengünstigen Herstellung des Wärmetauschers beiträgt. Zugleich können bei dieser Art der Herstellung die Rippen an den Wandungen sehr einfach einstückig mit letzteren erzeugt werden, da die Rippen in Entformrichtung verlaufen.

Da Kraftstoff lediglich bei niedrigen Temperaturen vorgewärmt werden muß, ist im allgemeinen bei Kraftstoff-Vorwärmern ein den Kraftstoff-Durchfluß regelndes Thermostatventil vorgesehen. Zur Beibehaltung der kompakten Bauform des Wärmetauschers gemäß Erfindung ist vorgesehen, daß in einem der beiden Deckel oder im Mittelteil ein den Kraftstoff in Abhängigkeit von dessen Einström-Temperatur teilweise oder vollständig durch die Kanäle im Mittelteil und/oder teilweise oder vollständig durch einen in dem Deckel oder im Mittelteil angeordneten Nebenstrom-Kanal leitendes Thermostatventil angeordnet ist. Ein eigenes Gehäuse für das Ventil sowie zusätzliche montage- und Anschlußarbeiten beim Einbau des Wärmetauschers entfallen dadurch gänzlich.

Ein weiterer Bestandteil üblicher Kraftstoff-Anlagen ist ein separater Kraftstoff-Filter. Um auch diesen als separates Bauteil überflüssig zu machen, ist vorgesehen, daß in den einen der Deckel oder in den Mittelteil ein vom Kraftstoff unabhängig von der Stellung des Thermostatventils durchströmter Kraftstoff-Filter integriert ist. Diese Maßnahme trägt weiter zu einer Steigerung der Kompaktheit und zu einer Verringerung des.Material- und Montageaufwandes bei. Zweckmäßig ist dabei vorgesehen, daß der Filter einen auswechselbaren Einsatz aufweist, der über eine dicht verschließbare Öffnung im Wärmetauscher entnehmbar ist.

Da ein als Kraftstoff-Vorwärmer dienender Wärmetauscher erst nach einer gewissen Motorbetriebszeit, in der Praxis einige Minuten, Wärme an den Kraftstoff abgeben kann, kann es unter ungünstigen Umständen zu Betriebsstörungen des Motors in der Warmlaufphase kommen. Zwar setzen sich Kraftstoff-Filter auch bei niedrigen Temperaturen erst nach einiger Zeit und nicht schlagartig mit Paraffinkristallen zu, jedoch kann hiergegen vorbeugend vorteilhaft im Mittelteil oder in einem der Deckel wenigstens ein elektrisch betreibbares, vom einströmenden Kraftstoff überstrichenes und/oder durchströmtes Heizelement angeordnet sein. Dieses sorgt bevorzugt in der Warmlaufphase dafür, daß auch bei noch kaltem Kühlwasser eine Erwärmung des Kraftstoffes erfolgt, wodurch die erwähnten Betriebsstörungen sicher vermieden werden. Da auch dieses Element in den Wärmetauscher integriert ist, tritt auch hierfür nur ein geringer Mehraufwand an Teilen und Installationsarbeit auf.

Mit der Erfindung wird damit ein als Kraftstoff-Vorwärmer dienender Wärmetauscher zur Verfügung gestellt, der kompakt, kostengünstig und wirkungsvoll ist und der alle für einen sicheren und zuverlässigen Betrieb erforderlichen Eigenschaften und Teile in sich vereinigt.

Bevorzugte Ausführungsbeispiele des Kraftstoff-Vorwärmers gemäß der Erfindung werden im folgenden anhand einer Zeichnung näher erläutert. Es zeigen im einzelnen :

| Figur 1 | den Vorwärmer in einer ersten Ausführungsform bei entferntem Deckel in Aufsicht auf die eine Flachseite ("Wasserseite"), |
| Figur 2 | den Vorwärmer aus Figur 1, ebenfalls bei entferntem Deckel in Aufsicht auf die zweite Flachseite ("Kraftstoffseite"), |
| Figur 3 | den Vorwärmer gemäß den Figuren 1 und 2 im Querschnitt entlang der Linie III-III in Figur 2 mit aufgesetzten Deckeln, |
| Figur 4 | den Vorwärmer gemäß den Figuren 1-3 im Längsschnitt entlang der Linie IV-IV in Figur 2, |
| Figur 5 | den Vorwärmer gemäß den Figuren 1-4 ebenfalls im Längsschnitt, hier entlang der Linie V-V in Figur 2, |
| Figur 6 | den Vorwärmer in einer Ausführung mit in den einen der Deckel integriertem Thermostatventil und Kraftstoff-Filter, im Längsschnitt, |
| Figur 7 | den Vorwärmer in einer dritten Ausführung in perspektivischer, teilweise aufgeschnittener Darstellung mit einem abgehobenen Deckel, |
| Figur 8 | den Vorwärmer gemäß Figur 7 in Aufsicht auf die eine Flachseite ("Kraftstoffseite"), teils im Schnitt, mit abgenommenen Deckel |
| Figur 9 | den Vorwärmer gemäß den Figuren 7 und 8 in Aufsicht auf die andere Flachseite ("Wasserseite"), mit seitlich versetztem Deckel, |
| Figur 10 | den Vorwärmer in einer vierten Ausführung im Querschnitt und |
| Figur 11 | den Vorwärmer aus Figur 10 im Längsschnitt entlang der Linie XI-XI in Figur 10. |

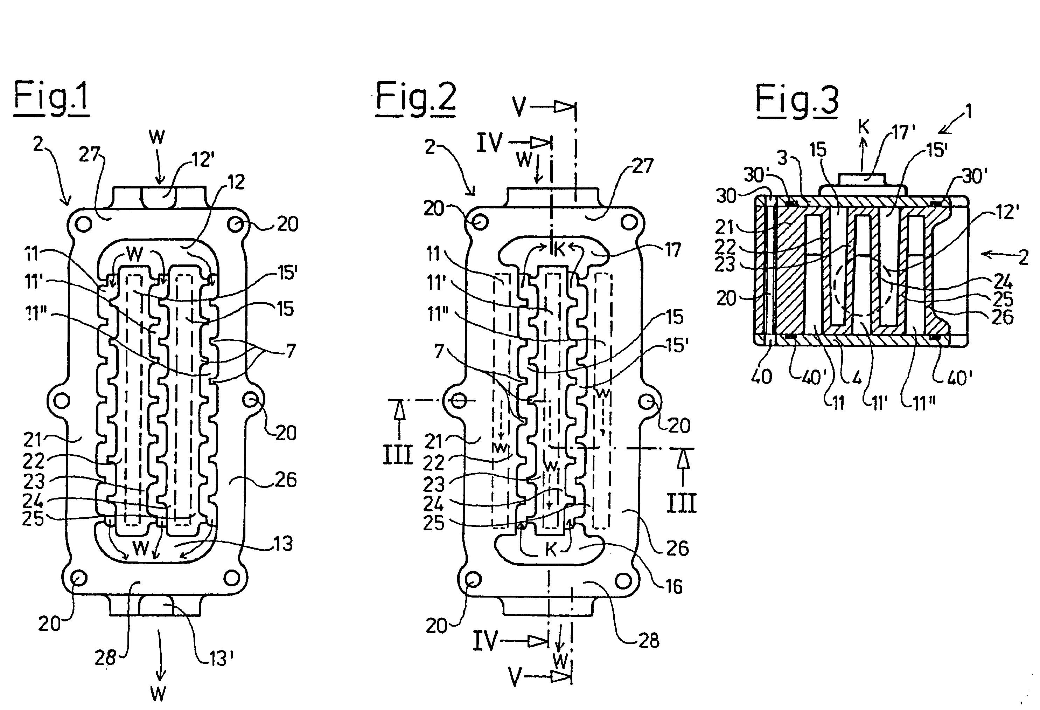

Wie aus einer Zusammenschau der Figuren 1-3 der Zeichnung ersichtlich ist, hat das erste Ausführungsbeispiel des erfindungsgemäßen Kraftstoff-Vorwärmers eine im wesentlichen quaderförmige Gestalt. Ein Mittelteil 2 ist dabei ober- und unterseitig jeweils von einem Deckel 3 bzw. 4 abgedeckt. Wie besonders deutlich Figur 3 zeigt, besteht der Mittelteil 2 im wesentlichen aus einem im Querschnitt mäanderförmig verlaufenden Wandungszug mit Wandungen 21-26. Zwischen den genannten Wandungen 21-26 werden so zwei Gruppen von Kanälen gebildet, deren eine Gruppe die Kanäle 11, 11' und 11" und deren andere Gruppe die Kanäle 15 und 15' umfaßt. Wie aus Figur 3 und auch aus den Figuren 1 und 2 deutlich ersichtlich ist, sind die genannten Kanäle 11, 11' und 11" sowie 15 und 15' bei von dem Mittelteil 2 abgenommenen Deckeln 2 und 4 jeweils zu einer der Flachseiten des Vorwärmers 1 hin offen. Bei der in Figur 1 gezeigten Darstellung des Mittelteils 2 geht also der Blick in die Kanäle 11, 11' und 11" hinein, während bei der die andere Flachseite des Mittelteils 2 zeigenden Figur 2 der Blick in die Kanäle 15 und 15' hineingeht.

Die genannten Kanäle dienen zur Führung zweier fluider Medien, hier Wasser W aus dem Kühlwasserkreislauf eines Verbrennungsmotors und Kraftstoff K für den betreffenden Motor. Wie ein Vergleich von Figur 1 und 2 zeigt, strömen dabei das Wasser W sowie der Kraftstoff K im Gegenstrom zueinander durch den Mittelteil 2 des Vorwärmers 1. Das Wasser W, das erwärmt von einem nicht dargestellten Motor kommt, gelangt durch einen Zulauf 12' in einen im Mittelteil 2 vorhandenen Verteilerkanal 12, der am einen Ende der Kanäle 11, 11' und 11" angeordnet ist und diese miteinander verbindet. Nach dem Durchströmen der Kanäle 11, 11' und 11" gelangt das Wasser W in einen am anderen Ende der genannten Kanäle angeordneten Sammelkanal 13 und von dort durch einen Auslauf 13' wieder zurück in den Motorkühlkreislauf. In den Kanälen 11, 11' und 11", die parallel zueinander in Längsrichtung durch den Mittelteil 2 verlaufen, sind mit den Wandungen 21-26 einstückige, in die genannten Kanäle vorspringende Rippen 7 angeordnet. Diese sorgen für eine intensive Verwirbelung des durchströmenden Wassers und verhindern so eine laminare, wärmeaustauscharme Strömung. Stirnseitig ist der Mittelteil 2 jeweils durch eine mit dem übrigen Teil einstückige Stirnwandung 27 bzw. 28 abgeschlossen, wobei die beiden Stirnwandungen in diesem Ausführungsbeispiel den Zulauf 12' sowie den Ablauf 13' für das Wasser aufnehmen. Die Oberseite der Stirnwandungen 27 und 28 sowie der äußeren Längswandungen 21 und 26 ist umlaufend eben ausgebildet und dient zur Aufnahme des Deckels 4, wie die Figur 3 zeigt. Zur Verbindung zwischen Mittelteil 2 und Deckel 4 sind im Mittelteil Gewindebohrungen 20 vorgesehen, in welche durch Bohrungen 40 im Deckel 4 geführte Schrauben einschraubbar sind. Zur Vermeidung eines Austrittes von Wasser aus den Kanälen 11, 11' und 11" nach außen sind zwischen den außenseitigen Längswandungen 21 und 26 einerseits sowie dem Deckel 4 andererseits Dichtmittel 40' vorgesehen. Weitere Dichtungen sind an der Seite des Deckels 4 nicht erforderlich, da lediglich Wasser aus dem einen Kanal wiederum in einen anderen wasserführenden Kanal gelangen kann. Eine Vermischung der beiden Medien ist damit ausgeschlossen. Analog ist die gegenüberliegende Seite des Vorwärmers 1 ausgebildet. Hier ist der Deckel 3 ebenfalls unter Zwischenlage von Dichtmitteln 30' mittels durch Öffnungen 30 führbarer Schrauben mit dem Hauptteil 2 verbindbar. Weiterhin ist, auf dem Deckel 3 angeordnet, ein Ablauf 17' für den Kraftstoff erkennbar, der mit dem Sammelkanal 17 (siehe Figur 2) in Strömungsverbindung steht. Als letztes ist schließlich aus Figur 3 noch die Lage des Zulaufs 12' für das Wasser in Form eines gestrichelten Kreises erkennbar.

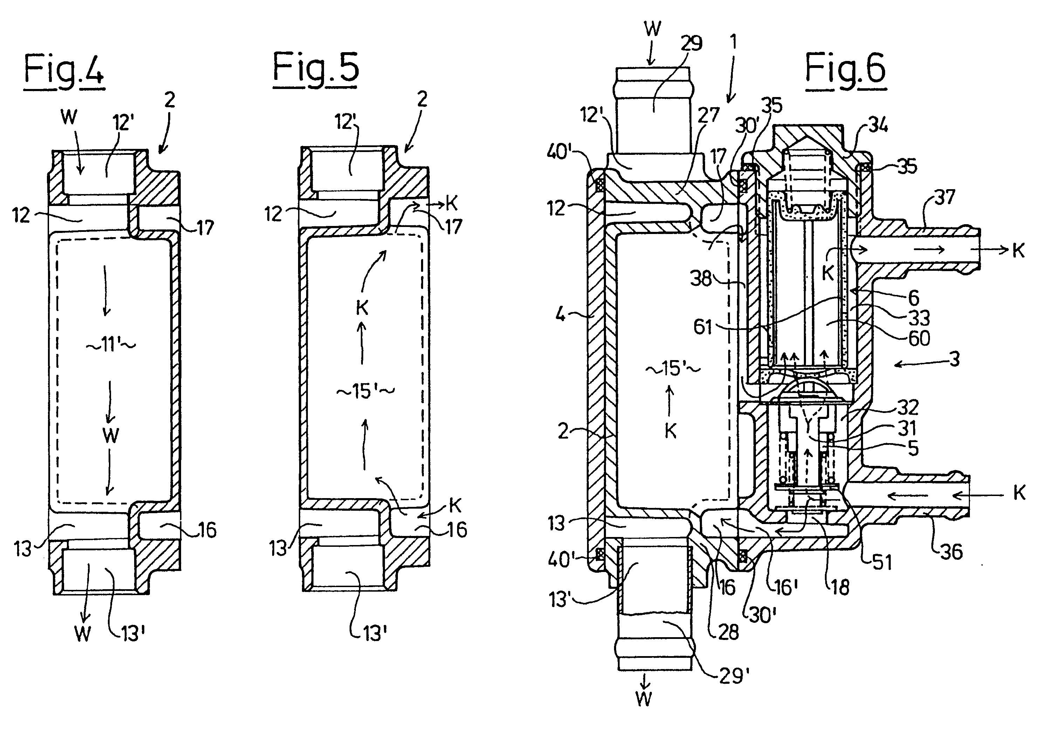

Die Figuren 4 und 5 zeigen zwei Längsschnitte durch den Mittelteil 2 des Vorwärmers 1, die insbesondere die Lage der Verteiler- und Sammelkanäle sowie deren Verbindung mit den Kanälen für die beiden Medien zeigen. Dabei verläuft der in Figur 4 dargestellte Schnitt durch einen der Kanäle für das Wasser, nämlich dem Kanal 11', während der Schnitt in Figur 5 durch einen Kanal für den Kraftstoff, nämlich den Kanal 15' verläuft. Wie bereits im Vorangehenden beschrieben und wie insbesondere aus Figur 4 ersichtlich gelangt das Wasser W durch den Zulauf 12' in den Verteilerkanal 12, von wo es sich auf die wasserführenden Kanäle, darunter auch den Kanal 11', verteilt. Nach dem Durchströmen der Kanäle, hier u.a. des Kanals 11', gelangt das Wasser in den Sammelkanal 13 und strömt von dort durch den Ablauf 13' ab. Die Lage des Mittelteils 2 in der Figur 4 ist hierbei so, daß an der in der Figur linken Seite der "wasserseitige" Deckel 4 anzuordnen wäre, während auf der gegenüberliegenden, d.h. rechten Seite der Darstellung der "kraftstoffseitige" Deckel 3 aufzusetzen wäre. Diese Anordnung der Deckel gilt auch für die Darstellung in Figur 5, die in analoger Weise den Strömungsweg des Kraftstoffes K zeigt. Dieser gelangt nach dem Einströmen in den Verteilerkanal 16 durch die kraftstofführrenden Kanäle 15 und 15', sichtbar hier 15', in den Sammelkanal 17 und strömt von dort ab. Das erwärmt einströmende Wasser W gibt während des Durchströmens des Mittelteils 2 seine Wärme oder zumindest einen Teil davon an den im Gegenstrom ebenfalls durch den Mittelteil 2 strömenden Kraftstoff ab, wodurch dieser in erwünschter Weise vorgewärmt wird. Wie aus den Figuren 4 und 5 zu entnehmen ist, sind die Kanäle für das Wasser und die Kanäle für den Kraftstoff durch durchgehende Wandungen voneinander getrennt. Schwierig herzustellende und schadensanfällige dichtende Verbindungen unter Zuhilfenahme von Dichtmitteln sind bei dem erfindungsgemäßen Vorwärmer zur Trennung von Wasser und Kraftstoff nicht erforderlich.

Während in den Figuren 1-5 eine relativ einfache Ausgestaltung des Vorwärmers 1 dargestellt wird, zeigt die Figur 6 ein Ausführungsbeispiel der Erfindung, in welchem in den Vorwärmer 1 zusätzlich ein Thermostatventil 5 sowie ein Kraftstoff-Filter 6 integriert sind. Die Darstellung in Figur 6 ist dabei ein Schnitt, der ähnlich der Figur 5 in Längsrichtung durch den Kanal 15' für den Kraftstoff K gelegt ist. Der Mittelteil 2 ist bei diesem Ausführungsbeispiel des Vorwärmers 1 im wesentlichen so ausgeführt, wie bei dem im Vorangehenden beschriebenen ersten Ausführungsbeispiel der Erfindung. An der "Wasserseite", d.h. in der Darstellung links, ist der Mittelteil 2 mit dem Deckel 4 unter Zwischenlage von Dichtmitteln 40' verschlossen, wie er auch bei dem Vorwärmer gemäß dem ersten Ausführungsbeispiel zur Verwendung kommt. Stirnseitig ist der Mittelteil 1 lediglich noch durch je einen Zulaufstutzen 29 sowie einen Ablaufstutzen 29' ergänzt, auf welche jeweils eine Schlauchleitung zur Zu- und Abführung von Wasser aufsteckbar ist.

Das bereits erwähnte Thermostatventil 5 sowie der Kraftstoff-Filter 6 sind bei diesem Ausführungsbeispiel in den "kraftstoffseitigen" Deckel 3 integriert. Der kalte Kraftstoff K gelangt durch einen Zulaufstutzen 36 im rechten unteren Teil der Darstellung zunächst in eine Ventilkammer 32. In dieser ist zentral das Thermostatventil 5 angeordnet, das einen Ventilteller 51 entsprechend der Temperatur des einströmenden Kraftstoffes verschiebt. Bei kaltem Kraftstoff K, d.h. in der in der Figur 6 mit durchgezogenen Linien gezeichneten Lage des Ventiltellers 51, ist eine Überströmöffnung 18 freigegeben, durch welche der Kraftstoff von der Ventilkammer 32 in den Zulauf 16' und weiter in den Verteilerkanal 16 gelangt. Von dort verteilt sich der Kraftstoff, wie bereits erläutert, auf die Kanäle 15 und 15', von wo aus er in den Sammelkanal 17 am anderen Ende der Kanäle 15 und 15' gelangt. Von dort strömt der Kraftstoff nicht, wie bei dem ersten Ausführungsbeispiel, unmittelbar ab, sondern wird durch einen Zuleitungskanal 38 zur Einlaufseite des Kraftstoff-Filters 6, genauer in den Filterinnenraum 60 geführt. Nach dem Durchströmen einer Filterpapierlage oder Filtergewebelage 61 gelangt der Kraftstoff in eine den Kraftstoff-Filter 6 umgebende Filterkammer 33 und strömt von dort schließlich durch den Ablaufstutzen 37 ab.

Hat der durch den Zulaufstutzen 36 zuströmende Kraftstoff bereits eine ausreichend hohe Temperatur, so nimmt der Ventilteller 51 die in der Figur 6 gestrichelt dargestellte Stellung ein, d.h. er verschließt die Überströmöffnung 18. In dieser Stellung ist gleichzeitig ein Nebenstromkanal 31, der durch das Innere des Thermostatventils 5 verläuft, geöffnet. Der Nebenstromkanal 31 führt den Kraftstoff unmittelbar in den Innenraum 60 des Kraftstoff-Filters 6, von wo aus er, wie beschrieben, unter Durchströmen der Filterpapierlage 61 durch den Ablaufstutzen 37 abströmt.

Ein Durchströmen der Kanäle 15 und 15' und damit eine Wärmeaufnahme aus dem in den anderen Kanälen strömenden Kühlwasser wird so verhindert. Außer den beiden Extremstellungen, die hier beschrieben wurden, kann der Ventilteller 51 auch Zwischenstellungen einnehmen, wobei dann ein Teil des Kraftstoffes durch den Mittelteil 2 strömt, während ein Teil des Kraftstoffes unmittelbar zum Kraftstoff-Filter 6 und dann zum Ablaufstutzen 37 strömt.

Auch in dieser Ausführung sind der Mittelteil 2 und der Deckel 3 unter Zwischenlage von Dichtungsmitteln 30' dichtend miteinander verbunden. Die Filterpapier- oder Filtergewebelage 61 hat hier die Form eines zylindrischen Filterkörpers, der nach dem Öffnen eines Filterkammerverschlusses 34 entnehmbar bzw. austauschbar ist. Zur Vermeidung eines Kraftstoffaustrittes ist der Filterkammerverschluß 34 von einer Dichtung 35 unterlegt.

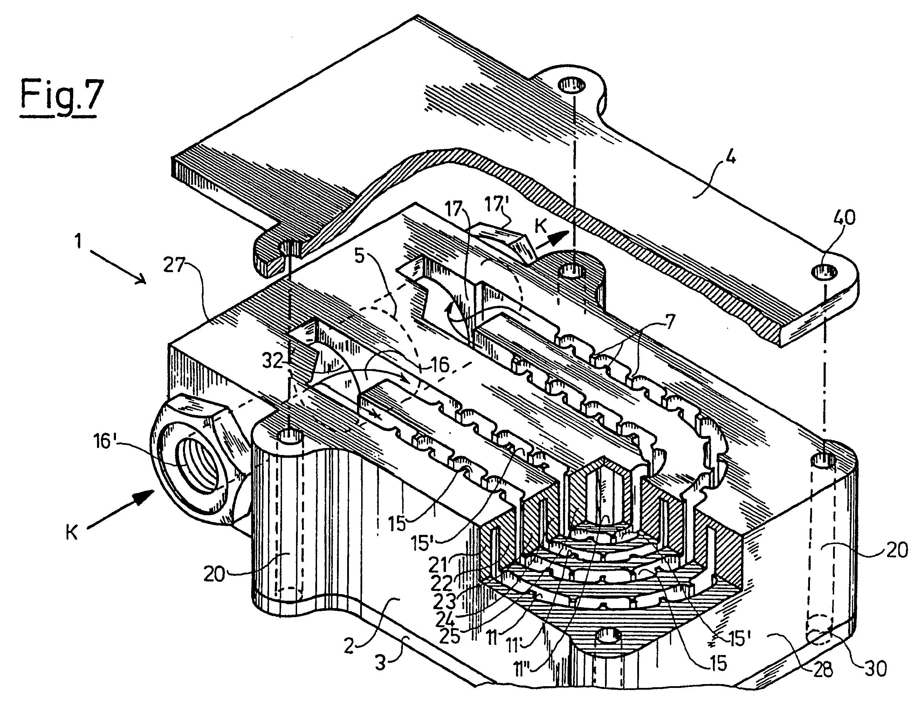

Figur 7 zeigt in perspektivischer Ansicht ein drittes Ausführungsbeispiel des erfindungsgemäßen Kraftstoff-Vorwärmers 1. Der "kraftstoffseitige" Deckel 4 ist in dieser Darstellung zur Sichtbarmachung der Anordnung der Kanäle 11, 11' und 11" sowie 15 und 15' abgehoben. Außerdem ist ein Teil des Mittelteils 2 aufgeschnitten dargestellt.

Wie aus der Figur 7 ersichtlich ist, sind die Kanäle 11, 11' und 11" für das Wasser und die Kanäle 15 und 15' für den Kraftstoff U-förmig verlaufend angeordnet. Trotz dieses geänderten Verlaufes der Kanäle bleibt aber der grundsätzliche Aufbau des Mittelteils 2 mit dem mäandrierend verlaufenden Wandungszug der Wandungen 21-26 erhalten. Der Unterschied ist lediglich, daß die Anordnung des Wandungszuges mit den Wandungen 21-26 sich symmetrisch zu einer in Längsrichtung durch den Mittelteil 2 verlaufenden vertikalen Symmetrieebene wiederholt. Damit entspricht das hier dargestellte Ausführungsbeispiel des Mittelteils 2 im wesentlichen dem in den Figuren 1-5 gezeigten ersten Ausführungsbeispiel, wobei der Mittelteil 2 U-förmig unter Verschmelzung der aufeinander zu gefalteten Wandungen zu einer Mittelwandung 26 gebogen ist. Die Stirnseite 28 des Mittelteils 2 liegt nunmehr im Bereich des U-Bogens der Kanäle und die Stirnseite 27 liegt im Bereich der Zu- und Abläufe für die beiden Medien. Von diesen ist in der Ansicht gemäß Figur 7 der Zulauf 16' sowie der Ablauf 17' für den Kraftstoff K erkennbar. Diese sind im dargestellten Ausführungsbeispiel in unmittelbarer Nähe der Stirnfläche 27 in den einander gegenüberliegenden Seitenflächen des Mittelteils angeordnet. In diesem Teil des Mittelteils 2 ist zwischen Einlauf 16' und Auslauf 17' ein an diese Ausführung des Kraftstoff-Vorwärmers angepaßtes Thermostatventil 5 angeordnet. Dieses regelt den Fluß des Kraftstoffes vom Zulauf 16' in den Verteilerkanal 16, von wo aus sich der Kraftstoff auf die Kanäle 15 und 15' verteilt. Nach deren Durchströmung gelangt der Kraftstoff in den dem Verteilerkanal 16 unmittelbar benachbarten Sammelkanal 17 und von dort zum bereits erwähnten Ablauf 17'. Parallel zum Kraftstoff, aber in Gegenstromrichtung, strömt das Wasser unter Wärmeabgabe an den Kraftstoff durch die Kanäle 11, 11' und 11".

Soll der Kraftstoff nicht weiter erwärmt werden, öffnet das Ventil 5 einen Nebenstromkanal 32, der den Zulauf 16' unmittelbar mit dem Ablauf 17' verbindet, wobei zugleich die Überströmöffnung 18 verschlossen wird.

Die Verbindung des abgehobenen Deckels 4 erfolgt — wie bereits beschrieben — mittels durch Bohrungen 40 in Gewindebohrungen 20 im Mittelteil 2 führbarer Schrauben. In gleicher Weise ist der unterseitige, d.h. "wasserseitige" Deckel 3 über durch Bohrungen 30 geführte Schrauben mit dem Mittelteil 2 verbindbar.

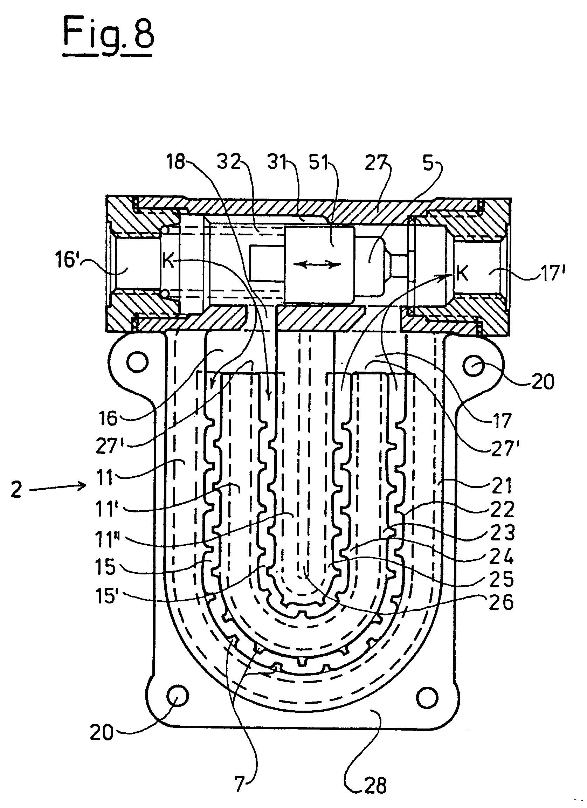

Figur 8 zeigt nochmal einen Blick auf die "Kraftstoffseite" des Mittelteils 2 gemäß dem Ausführungsbeipiel nach Figur 7. Hier ist wiederum der U-förmige Verlauf der Kanäle 11, 11' und 11" sowie 15 und 15' zwischen den Wänden 21-26 zu erkennen. Auf den genannten Wandungen sind wiederum die in die aufgeführten Kanäle ragenden Rippen 7 sichtbar.

Der Teil des Mittelteils 2, der das Thermostatventil 5 enthält, ist hier im Schnitt gezeichnet, um die Wirkungsweise des hier verwendeten Ventil 5 zu verdeutlichen. In der gezeigten Stellung des Ventils 5 gibt ein axial verschiebbarer Ventilkörper 51 die Überströmöffnung 18 vom Einlauf 16' für den Kraftstoff zum Verteilerkanal 16 frei. Bei höherer Temperatur des einströmenden Kraftstoffes wird der Ventilkörper 51 nach links bewegt, so daß er die Überströmöffnung 18 verschließt und den Nebenstromkanal 31, der den Zulauf 16' und den Ablauf 17' verbindet, freigibt. Die zur Anordnung des Ventils dienende Ventilkammer 32 sowie das Ventil 5 selbst sind durch Abschrauben von in den Mittelteil 2 im Bereich von Zulauf 16' und Ablauf 17' eingeschraubten Anschlußstutzen zugänglich.

Schließlich soll hier noch einmal darauf hingewiesen werden, daß alle Kanäle, sowohl die für Wasser als auch die für Kraftstoff, in der gleichen Ebene 27' beginnen bzw. enden. Hierdurch können sämtliche für den Betrieb des Vorwärmers erforderlichen Anschlüsse an einem Ende, genauer im Bereich der Stirnwand 27 angeordnet werden. Die Stirnwand 28 bleibt hierbei völlig frei von irgendwelchen Zu- oder Ableitungen.

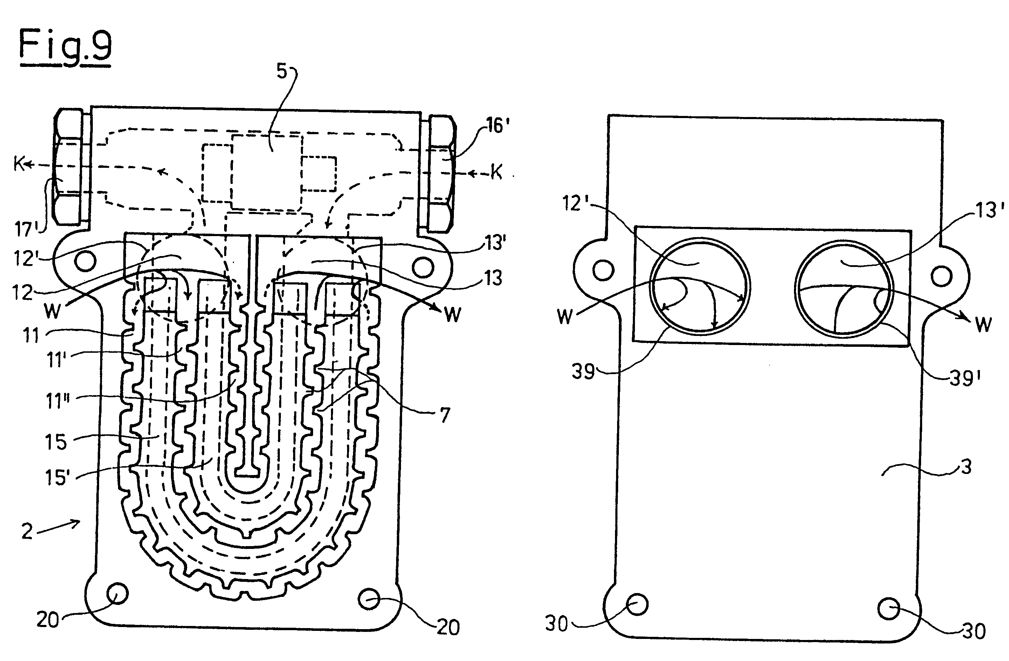

Figur 9 zeigt den Mittelteil des Ausführungsbeispiels gemäß den Figuren 7 und 8 von der "Wasserseite" her gesehen. Auch hier ist wiederum der U-förmige Verlauf der wasserführenden Kanäle 11, 11' und 11" sowie andeutungsweise der durch gestrichelte Linien dargestellte Verlauf der Kanäle 15 und 15' für den Kraftstoff erkennbar. Auch die Rippen 7 sind hier vorhanden. Während der Kraftstoff K, wie beschrieben, durch den Einlauf 16' in den Mittelteil 2 gelangt und diesen durch den Ablauf 17' wieder verläßt, strömt das Wasser W von oben her durch den Einlauf 12' in den Verteilerkanal 12 und verteilt sich von dort auf die Kanäle 11, 11' und 11". Nach deren Durchströmung gelangt das Wasser in den Sammelkanal 13, der dem Verteilerkanal 12, wie beim Kraftstoff auch, unmittelbar benachbart ist, und von dort zum Auslauf 13'.

Die Ausgestaltung des "wasserseitigen" Deckels 3 bei diesem Ausführungsbeispiel geht aus der rechten Hälfte der Figur 9 hervor. Hier ist der Deckel in vom Mittelteil 2 seitlich abgeschobener Stellung dargestellt. Oberhalb des Verteilerkanals 12 bzw. des Sammelkanals 13 sind hier jeweils ein Zulauf 12' sowie ein Ablauf 13' durch einen Zulaufanschluß 39 bzw. einen Ablaufanschluß 39' für entsprechende Wasserleitungen gebildet. Die Strömungsrichtung des Wassers ist hier noch einmal durch entsprechende Strömungspfeile sowie den Buchstaben W gekennzeichnet. Weiter erkennbar sind an dem Deckel 3 die Bohrungen 30, die mit den Gewindebohrungen 20 an dem Mittelteil 2 deckungsgleich sind und zur Durchführung von Verbindungsschrauben dienen.

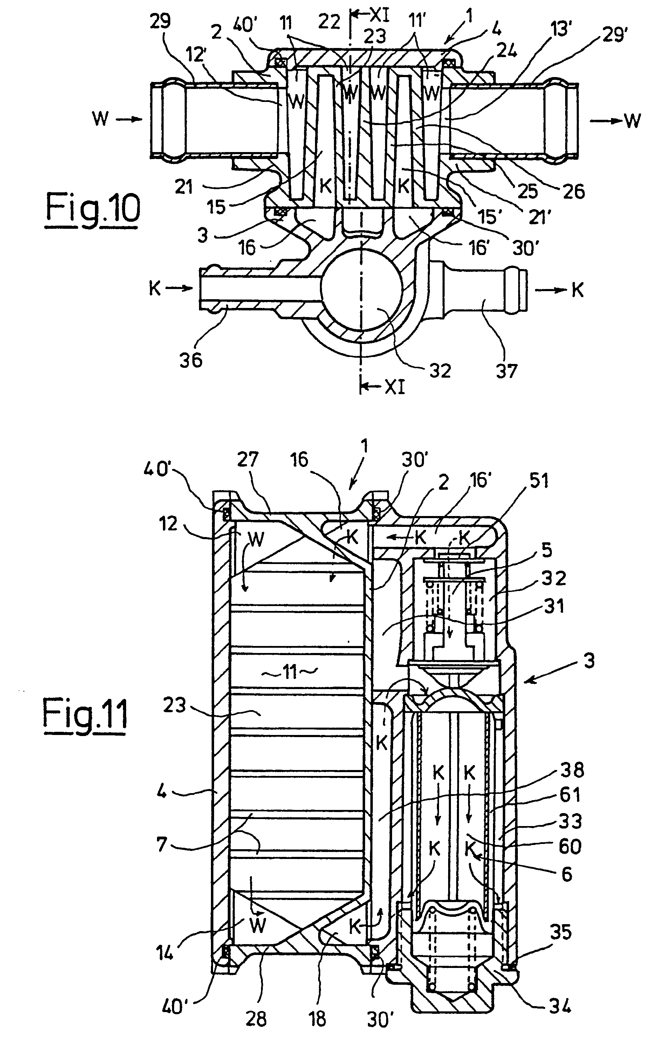

Figur 10 der Zeichnung zeigt einen Vorwärmer 1 in einer vierten Ausführung im Querschnitt. Ähnlich dem Ausführungsbeispiel gemäß Figur 6 besteht auch dieses Ausführungsbeispiel des Vorwärmers 1 aus einem Mittelteil 2, einem "kraftstoffseitigen" Deckel 3 mit einem Ventil und einem Filter sowie einem zweiten, "wasserseitigen" Deckel 4. Auch hier wird der Mittelteil 2 aus einem im wesentlichen mäandrierend verlaufenden Wandungszug bestehend aus Wandungen 21, 22, 23, 24, 25, 26 und 21' gebildet. Im Unterschied zu den vorher beschriebenen Ausführungen ist hier allerdings der Mittelteil 2 symmetrisch zu einer mittleren Wandung 24 aufgebaut. Hierdurch ergeben sich insgesamt vier wasserführende Kanäle 11 und 11' sowie zwei jeweils ,zwischen zwei wasserführenden Kanälen 11 bzw. 11' gelegene kraftstofführende Kanäle 15 bzw. 15'. Ein weiterer Unterschied zu den vorangehend beschriebenen Ausführungen besteht darin, daß Zulauf 12' und Ablauf 13' für das Wasser sowie die zugehörigen Anschlußstutzen 29 und 29' nicht im Bereich der Stirnwandungen des Mittelteils 2 sondern endseitig in dessen äußeren Wandungen 21 und 21' angeordnet sind. Durch diese Änderung der Lage der Anschlußstutzen 29 und 29' wird eine wesentlich verringerte Baulänge des Vorwärmers 1 erreicht, so daß beengten Einbauverhältnissen Rechnung getragen werden kann. Wie bei allen Ausführungen sind auch bei diesem Ausführungsbeispiel die wasserführenden Kanäle 11 und 11' zu ihrer einen Längsseite, d.h. hier zum Deckel hin 4 offen und die kraftstofführenden Kanäle 15 bzw. 15' zu ihrer dem Deckel 3 zugewandten Längsseite hin offen. Ein Vermischung von Kraftstoff und Wasser kann daher auch bei dem Vorwärmer gemäß Figur 10 nicht auftreten. Zur Vermeidung eines Austritts von Wasser bzw. Kraftstoff aus dem Inneren des Vorwärmers 1 nach Außen sind zwischen diesem und dem Deckel 4 bzw. 3 Dichtungen 40' bzw. 30' angeordnet.

Die Strömungsrichtungen von Wasser W und Kraftstoff K sind anhand der Strömungspfeile aus der Figur 10 ersichtlich. Das erwärmte Wasser W strömt durch den Einlaufstutzen 29 und den Zulauf 12' in die beiden parallel zueinanderverlaufenden wasserführenden Kanäle 11. Durch diese strömt das Wasser in zwei parallelen Strömen zum gegenüberliegenden Ende des Mittelteils 2, wo es umgelenkt und mit entgegengesetzter Strömungsrichtung in die Kanäle 11' geleitet wird. Nach deren Durchströmung tritt das Wasser W durch den Ablauf 13' und den zugehörigen Ablaufstutzen 29' wieder aus dem Vorwärmer 1 aus.

Der kalte, vorzuwärmende Kraftstoff K strömt durch einen Zulaufanschlußstutzen 36 am Deckel 3 zunächst in eine Ventilkammer 32, von wo aus er, wie anhand der noch zu beschreibenden Figur 11 deutlicher wird, bei entsprechender Ventilstellung zunächst in einen zweigeteilten Zulauf 16' und von dort in parallelem Strom in die kraftstcfführenden Kanäle 15 und 15'. Nach deren Durchströmung gelangt der Kraftstoff K am anderen Ende des Vorwärmers 1 wieder in den Deckel 3 und von dort durch den Ablaufanschlußstutzen 37 wieder aus dem Vorwärmer 1 heraus.

Figur 11 schließlich zeigt den Vorwärmer 1 gemäß Figur 10 im Längsschnitt entlang der Linie XI-XI in Figur 10. Hierdurch ergibt sich in Figur 11 eine ähnliche Darstellung des Vorwärmers 1 wie in Figur 6, wobei allerdings in Figur 11 die Schnittebene durch einen der wasserführenden Kanäle 11 verläuft. Weiterhin ist aus Figur 11 wieder die Zusammensetzung des Vorwärmers 1 aus Mittelteil 2, "kraftstoffseitigem" Deckel 3 und "wasserseitigem" Deckel 4 erkennbar. Zwischen den genannten Teilen sind wiederum die Dichtungen 30' und 40' umlaufend angeordnet. Bei der gewählten Blickrichtung für den Schnitt XI-XI fällt der Blick auf die den wasserführenden Kanal 11 begrenzende Wandung 23 des mäandrierenden Wandungszuges. Stirnseitig ist der Mittelteil 2 durch die Stirnwandungen 27 und 28 begrenzt. Im Bereich der in der Figur oberen Stirnwand 27 ist ein zum Zulauf 12' für das Wasser gehörender Verteilerkanal 12 erkennbar. Diesem benachbart ist ein zum Zulauf 16' gehörender Verteilerkanal 16 für den Kraftstoff angeordnet. Am entgegengesetzten Ende, d. h. in Figur 11 unten, ist im Bereich der Stirnwand 28 ein Überström- bzw. Umlenkkanal 14 für das Wasser angeordnet. Weiterhin befindet sich dort ein Sammelkanal 18 für den Kraftstoff.

Im Deckel 3 sind, wie bereits angesprochen, das Thermostatventil 5 sowie der Kraftstofffilter 6 angeordnet. In der Ventilkammer 32 ist ein temperaturabhängigbewegter Ventilteller 51 des Ventils 5 erkennbar, welcher in seinen beiden Extremstellungen dargestellt ist.

Der Kraftstofffilter 6 entspricht in seinem Aufbau dem Filter wie in Figur 6. Auch hier ist eine Filterpapierlage 61 von zylinderartiger Form in einer Filterkammer 33 untergebracht.

Wie bereits in der Beschreibung von Figur 10 erläutert, strömt das Wasser W vom Verteilerkanal 12 kommend durch die wasserführenden Kanäle 11, wobei es durch quer zur Strömungsrichtung verlaufende Rippen 7 intensiv verwirbelt wird. Nach dem Durchströmen der Kanäle 11 wird das Wasser W durch den Überström- bzw. Umlenkkanal 14 in die in dieser Figur 11 nicht sichtbaren wasserführenden Kanäle 11' geleitet. Nach deren Durchströmung tritt das Wasser wieder aus dem Vorwärmer 1 aus.

Der durch den Zulaufanschlußstutzen 36 in den Deckel 3 eingeströmte Kraftstoff gelangt hier zunächst in den Zulauf 16'. Von hier aus fließt der Kraftstoff je nach Stellung des Ventiltellers 51 des Thermostatventils 5 entweder in den Verteilerkanal 16 im Mittelteil 2 oder durch das Thermostatventil 5 unmittelbar in den Kraftstofffilter 6. In der Schließstellung des Ventils 5, d.h. bei Anlage des Ventiltellers 51 an der den Zulauf 16' begrenzenden Wandung des Deckels 3, strömt der Kraftstoff durch den Verteilerkanal 16 und die mit diesem verbundenen kraftstoffführenden Kanäle 15 und 15' zum Ablauf bzw. Überleitkanal 18. Von dort strömt der Kraftstoff durch einen Zuleitungskanal 38 ebenfalls zum Kraftstofffilter 6, genauer in dessen Innenraum 60. Von dort gelangt der Kraftstoff nach Durchtritt durch die Filterpapierlage 61 in die Filterkammer 33 und von dort über den in der Figur 11 nicht sichtbaren Ablaufanschlußstutzen 37 aus dem Vorwärmer 1 heraus.

Ebenso wie in dem Ausführungsbeispiel des Vorwärmers 1 in Figur 6 ist auch bei diesem Ausführungsbeispiel zur Ermöglichung eines Auswechselns des Kraftstofffilters 6 die Filterkammer 33 mittels eines Gewindestopfens 34 und der Zwischenlage einer Dichtung 35 aufschraubbar verschlossen.

Die vorangehend beschriebenen unterschiedlichen Ausführungsbeispiele der Erfindung zeigen, daß mit der Erfindung die Herstellung von unterschiedlichen, an vorgegebene Einbausituationen flexibel anpassbaren Kraftstoff-Vorwärmern möglich ist. Sämtlichen Ausführungen, zu denen noch weitere Ausführungsformen denkbar sind, zeichnen sich durch einen hohen Wirkungsgrad und durch eine sehr kompakte Bauweise aus.

**Patentansprüche**

1. Wärmetauscher, in welchem ein erstes fluides Medium durch Aufnahme von Wärme aus einem zweiten fluiden Medium höherer Temperatur erwärmt wird, wobei die beiden Medien in voneinander getrennten Kanälen durch den Wärmetauscher geführt werden, wobei der Wärmetauscher (1) einen Mittelteil (2) aufweist, welcher im wesentlichen aus einem im Querschnitt mäandrierend verlaufenden Wandungszug (21-26) besteht, der zwei Gruppen von parallelen, abwechselnd zu der einen und zu der anderen Längsseite hin offenen, zwischen den einzelnen Wandungen (21-26) des Wandungszuges (21-26) verlaufenden Kanälen (11, 11', 11" ; 15, 15') bildet, wobei die Kanäle einer Gruppe alle zur gleichen Längsseite hin offen sind und wobei der Mittelteil (2) zwischen zwei die offenen Längsseiten der Kanäle (11, 11', 11" ; 15, 15') abdeckenden Deckeln (3, 4) angeordnet ist,

dadurch gekennzeichnet,

— daß der Wärmetauscher als Kraftstoff-Vorwärmer (1), in welchem Kraftstoff als erstes fluides Medium durch Aufnahme von Wärme aus Kühlwasser eines Kraftfahrzeugmotors als zweites fluides Medium höherer Temperatur erwärmbar ist, ausgebildet ist,

— daß im Mittelteil (2) für jedes der beiden Medien je ein die Kanäle (11, 11', 11" ; 15, 15') einer Gruppe jeweils endseitig miteinander verbindender Verteilerkanal (12 ; 16) mit je einem Zulauf (12' ; 16') von außen und Sammelkanal (13 ; 17) mit je einem Ablauf (13' ; 17') nach außen angeordnet sind und

— daß zumindest auf einem Teil der Wandungen (21-26) des Mittelteils (2) senkrecht zur Strömungsrichtung des jeweiligen Mediums verlaufende, in das Innere der Kanäle (11, 11', 11" ; 15, 15') vorragende Rippen (7) angeordnet sind.

2. Wärmetauscher nach Anspruch 1, dadurch gekennzeichnet, daß die Kanäle (11, 11', 11" ; 15, 15') im wesentlichen in einer gemeinsamen stirnseitigen Ebene (27') enden.

3. Wärmetauscher nach Anspruch 1 oder 2, dadurch gekennzeichnet, daß zumindest der Mittelteil (2) aus Aluminium oder einer Aluminium-Legierung besteht und im Druckgußverfahren hergestellt ist.

4. Wärmetauscher nach einem der Ansprüche 1 bis 3, dadurch gekennzeichnet, daß in einem der beiden Deckel (3 ; 4) oder im Mittelteil (2) ein den Kraftstoff in Abhängingkeit von dessen Einström-Temperatur teilweise oder vollständig durch die Kanäle (15, 15') im Mittelteil (2) und/oder teilweise oder vollständig durch einen in dem Deckel (3 ; 4) oder im Mittelteil (2) angeordneten Nebenstrom-Kanal (31) leitendes Thermostatventil (5) angeordnet ist.

5. Wärmetauscher nach einem der Ansprüche 1 bis 4, dadurch gekennzeichnet, daß in den einen der Deckel (3 ; 4) oder in den Mittelteil (2) ein vom Kraftstoff unabhängig von der Stellung des Thermostatventils (5) durchströmter Kraftstoff-Filter (6) integriert ist.

6. Wärmetauscher nach einem der Ansprüche 1 bis 5, dadurch gekennzeichnet, daß in den Mittelteil (2) oder einen der Deckel (3 ; 4) wenigstens ein elektrisch betreibbares, vom strömenden Kraftstoff überstrichenes und/oder durchströmtes Heizelement angeordnet ist.


## Claims

1. Heat exchanger in which a first fluid medium is heated by absorbing heat from a second fluid medium of a higher temperature, wherein the two media are conducted in separate channels through the heat exchanger, wherein the heat exchanger (1) has a middle part (2) consisting essentially of a wall line (21-26) having a meandering cross-section and having two groups of parallel channels (11, 11', 11" ; 15, 15'), which extend between the individual walls (21-26) of the wall line (21-26) and which are open alternately to one longitudinal side and the other, wherein the channels of one group are all open to the same longitudinal side, and wherein the middle part (2) is located between two covers (3, 4) covering the open longitudinal sides of the channels (11, 11', 11" ; 15, 15'),

characterised in that

— the heat exchanger is formed as a fuel preheater (1) in which fuel as a first fluid medium is heatable by absorbing heat from cooling water of a motor vehicle engine as a second fluid medium,

— in the middle part (2), for each of the two media there is provided a distribution channel (12 ; 16), which joins together the ends of the channels (11, 11', 11" ; 15, 15') of one group and has a respective inlet (12'; 16') from the outside, and a collecting channel (13 ; 17) with a respective outlet (13' ; 17') to the outside, and

— fins (7) projecting into the interior of the channels (11, 11', 11" ; 15, 15') are provided at least on part of the walls (21-26) of the middle part (2) and extend perpendicular to the flow direction of the respective medium.

2. Heat exchanger according to claim 1, characterised in that the channels (11, 11', 11" ; 15, 15') end substantially in a common, end-face plane (27').

3. Heat exchanger according to claim 1 or 2, characterised in that at least the middle part (2) consists of aluminium or an aluminium alloy and is manufactured by the diecasting process.

4. Heat exchanger according to one of claims 1 to 3, characterised in that in one of the two covers (3 ; 4) or in the middle part (2) a thermostatic valve (5) is provided, which conducts the fuel, as a function of its in-flow temperature, partly or completely through the channels (15, 15') in the middle part (2) and/or partly and completely through a bypass channel (31) provided in the cover (3 ; 4) or in the middle part (2).

5. Heat exchanger according to one of claims 1 to 4, characterised in that a fuel filter (6), through which fuel flows independently of the position of the thermostatic valve (5), is integrated into one of the covers (3 ; 4) or into the middle part (2).

6. Heat exchanger according to one of claims 1 to 5, characterised in that at least one electrically operated heating element, over and/or through which flowing fuel passes, is mounted in the middle part (2) or in one of the covers (3 ; 4).

## Revendications

1. Echangeur de chaleur dans lequel un premier milieu fluide est réchauffé par absorption de la chaleur d'un deuxième milieu fluide à une température plus élevée, les deux fluides étant guidés à travers l'échangeur de chaleur dans des canaux séparés les uns des autres, l'échangeur de chaleur (1) présentant une pièce centrale (2), qui est constituée pour l'essentiel d'un ensemble de parois (21 à 26) qui s'étend en coupe transversale en forme de méandres et forme deux groupes de canaux (11, 11', 11" ; 15, 15') parallèles, ouverts alternativement vers l'un et l'autre des côtés longitudinaux et s'étendant entre les différentes parois (21 à 26) de l'ensemble de parois (21 à 26), les canaux d'un groupe étant tous ouverts vers le même côté longitudinal et la pièce centrale (2) étant disposée entre deux couvercles (3, 4) rcouvrant les côtés longitudinaux ouverts des canaux (11, 11', 11" ; 15, 15'),
caractérisé en ce que
— l'échangeur de chaleur est réalisé sous forme de réchauffeur de chaleur (1) dans lequel du carburant constituant le premier milieu fluide peut être réchauffé par absorption de la chaleur de l'eau de refroidissement d'un moteur à combustion interne constituant le deuxième milieu fluide à une température plus élevée,
— la pièce centrale (2) comporte pour chacun des deux fluides un canal de distribution (12 ; 16) muni d'une arrivée (12' ; 16') de l'extérieur et reliant les canaux (11, 11', 11" ; 15, 15') d'un groupe côté extrémité ainsi qu'un canal collecteur (13 ; 17) muni d'une sortie (13' ; 17') vers l'extérieur, et
— en ce que des ailettes (7) s'étendant perpendiculairement à la direction d'écoulement du fluide considéré et faisant saillie à l'intérieur des canaux (11, 11', 11" ; 15, 15') sont disposées au moins sur une partie des parois (21 à 26) de la pièce centrale (2).

2. Echangeur de chaleur selon la revendication 1, caractérisé en ce que les canaux (11, 11', 11" ; 15, 15') se terminent essentiellement dans un plan frontal commun (27').

3. Echangeur de chaleur selon la revendication 1 ou 2, caractérisé en ce qu'au moins la pièce centrale (2) est constituée d'aluminium ou d'un alliage d'aluminium et est fabriquée par moulage sous pression.

4. Echangeur de chaleur selon l'une des revendications 1 à 3, caractérisé en ce qu'une soupape thermostatique (5) est disposée dans l'un des deux couvercles (3 ; 4) ou dans la pièce centrale (2) pour guider le carburant en fonction de sa température d'arrivée partiellement ou complètement dans les canaux (15, 15') dans la pièce centrale (2) et/ou partiellement ou complètement dans un canal en dérivation (31) disposé dans le couvercle (3 ; 4) ou dans la pièce centrale (2).

5. Echangeur de chaleur selon l'une des revendications 1 à 4, caractérisé en ce qu'un filtre de carburant (6) parcouru par le carburant indépendamment de la position de la soupape thermostatique (5) est intégré dans l'un des couvercles (3 ; 4) ou dans la pièce centrale (2).

6. Echangeur de chaleur selon l'une des revendications 1 à 5, caractérisé en ce qu'au moins un élément de chauffage actionnable électriquement et balayé et/ou traversé par le carburant qui s'écoule, est disposé dans la pièce centrale (2) ou dans l'un des couvercles (3 ; 4).

Fig.1

Fig.2

Fig.3

Fig.6

Fig.5

Fig.4

Fig.7

# Fig. 8

# Fig.9

EP 0 258 529 B1

Fig.10

Fig.11